# EUROPÄISCHE PATENTANMELDUNG

(11) **EP 0 952 286 A1**
(43) Veröffentlichungstag der Anmeldung: **27.10.1999**
(21) Anmeldenummer: 99107298.4
(22) Anmeldetag: 14.04.1999
(51) Int. Cl.: E05B 65/16, E05C 9/08

(54) **Drehstangenverschluss für Türen, Klappen oder dergleichen von Nutzfahrzeugaufbauten**

(30) Priorität: 16.04.1998 DE 29806857 U
(71) Anmelder: F. HESTERBERG & SÖHNE GmbH & Co. KG, D-58256 Ennepetal (DE)
(72) Erfinder: Breme, Stefan, 58339 Breckerfeld (DE); Deppe, Hans-Werner, 58135 Hagen (DE); Feinbier, Joachim, 58256 Ennepetal (DE); Gräfe, Hand-Gerd, 58332 Schwelm (DE); Kramme, Dieter, 58285 Gevelsberg (DE); Tiedtke, Henning, 58256 Ennepetal (DE); Wrobel, Margarethe, 58285 Gevelsberg (DE)
(74) Vertreter: Kneissl, Richard, Dr.

(57) **Zusammenfassung**

Die Erfindung geht aus von einem Drehstangenverschluß für Nutzfahrzeugaufbauten, der mindestens ein von der Drehstange (9) radial abstehendes Eingriffsteil (8) an einem der Enden der Drehstange (9), das in der Schließstellung durch einen an einem festen Aufbauteil angebrachten Gegenhalter (1) festgelegt ist, und eine Handhabe zum Drehen der Drehstange (9) aufweist. Wenn ein solcher bekannter Verschluß beispielsweise für Türen von Kofferaufbauten verwendet wird, dann entsteht, wenn sich beim Transport Ladung gegen die Türe legt, an der Drehstange ein Drehmoment, das von der Handhabe an der Drehstange aufgenommen werden muß. Der gesammte Verschluß muß deshalb außerordentlich stabil ausführt werden. Um dies zu vermeiden, besitzt der erfindungsgemäße Verschluß einen durch eine Feder (15) beaufschlagten Schieber (16) mit einem Arm (17), der in der Schließstellung einen axialen Zapfen (12) am Eingriffsteil (8) übergreift. Beim Öffnen des Verschlusses wird der Schieber (16) durch einen Nocken (13) am Eingriffsteil (8) zurückgedrückt.

## Beschreibung

Die Erfindung betrifft einen Drehstangenverschluß für Türen, Klappen oder dergleichen von Nutzfahrzeugaufbauten, mit mindesten einem Eingriffsteil an einem der Enden der senkrecht auf oder in der Türe oder Klappe gelagerten Drehstange, welches Eingriffsteil in der Schließstellung durch einen an einem festehenden Aufbauteil angebrachten Gegenhalter festgelegt ist, und mit einer Handhabe zum Drehen der Drehstange.

Drehstangenverschlüsse dieser Art werden insbesondere für Toren von Kofferaufbauten von Nutzfahrzeugen verwendet, wobei sie in aller Regel an beiden Enden der Drehstange ein Eingriffsteil aufweisen, das in der Schließstellung jeweils in einem eigenen Gegenhalter festgelegt ist. Das Eingriffsteil weist immer einen bezüglich der Drehstange radial abstehenden Spannzapfen auf, der in der Schließstellung hinter ein hakenförmiges Gebilde am Gegenhalter greift.

Beim Transport bzw. bei unsachgemäßer Beladung des Fahrzeugs kommt es immer wieder vor, daß Ladung von innen gegen die Türe oder Klappe drückt. Das hat zur Folge, daß an der Drehstange ein Drehmoment auftritt, welches von der Handhabe und der dieser zugeordneten Festhaltevorrichtung aufgefangen werden muß, d.h., daß sowohl die Drehstange als auch die Handhabe sowie deren Festhaltevorrichtung äußerst stabil ausgeführt werden müssen. Es gibt zwar schon verschieden Ausführungsformen von Drehstangenverschlüssen mit derart geformten Eingriffsteilen und Gegenhaltern, daß im geschilderten Fall kein Drehmoment auftritt. Diese sind jedoch kompliziert geformt und deshalb in der Herstellung verhältnismäßig teuer.

Der Erfindung lag die Aufgabe zugrunde, einen eingangs naher beschriebenen Drehstangenverschluß in einfacher Weise so weiterzubilden, daß bei Innendruck gegen die Türe oder Klappe kein Drehmoment auftritt.

Die erfindungsgemäße Lösung dies Aufabe besteht bei einem Drehstangenverschluß der eingangs naher skizzierten Art darin, daß das Eingriffsteil auf der der Drehstange gegenüberliegenden Seite einen axial zu dieser verlaufenden Zapfen sowie einen seitlich davon angeordneten Nocken aufweist und daß am feststehenden Aufbauteil ein durch eine Feder beaufschlagter Schieber gelagert ist, der in der Schließstellung des Verschlusses mit einem Arm den Zapfen auf der dem feststehenden Aufbauteil gegenüberliegenden Seite übergreift und in der Offenstellung des Verschlusses vom Nocken soweit zurückgedrückt wird, daß der Arm den Zapfen freigibt.

Beim erfindungsgemäßen Verschluß ist der Nocken auf dem Eingriffsteil so angeordnet, daß er in der Schließstellung des Verschlusses nicht auf den Schieber wirkt und somit der Arm desselben den Zapfen übergreift. Da der Schieber am feststehenden Aufbauteil befestigt ist, wird eine kraftschlüssige Verbindung zwischen diesem und dem Verriegelungsteil geschaffen, so daß ein Inndendruck gegen die Türe vom Schieber aufgefangen wird und ein Drehmoment an der Drehstange nicht auftreten kann. Beim Verdrehen der Drehstange zum Öffnen des Verschlusses legt der Nocken sich jedoch gegen den Schieber und drückt ihn zurück. Am Ende des Öffnungsvorgangs ist der Schieber soweit zurückgedrückt, daß der Arm den Zapfen nicht mehr übergreift.

Eine Ausführungsform des erfindungsgemäßen Verschlusses wird nachstehen anhand der beigefügten Zeichnungen näher erläutert. In diesen zeigen:

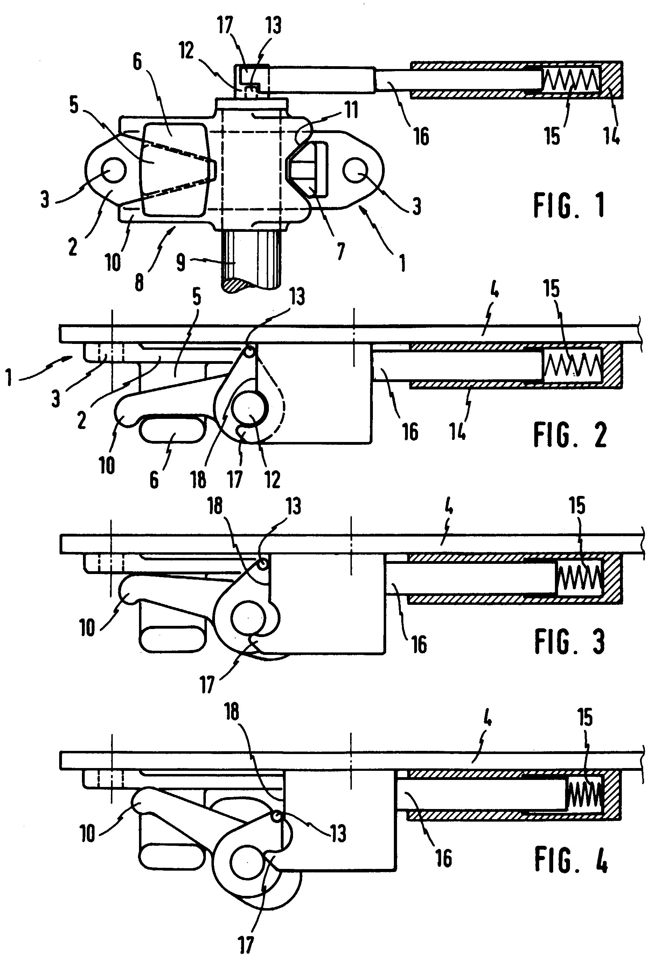

Fig. 1 eine Ansicht des oberen Eingriffsteils des erfindungsgemäßen Drehstangenverschlusses mit zugeordnetem Gegenhalter;
Fig. 2 eine Aufsicht auf die in Fig.1 dargestellten Teile;
Fig. 3 eine ähnliche Aufsicht wie Fig.2, jedoch bei Beginn des Öffnungsvorgangs; und
Fig. 4 ein fortgeschittenes Stadium des Öffnungsvorgangs.

Der Gegenhalter 1 weist eine Grundplatte 2 auf, die zwei Löcher 3 besitzt, mit deren Hilfe der Gegenhalter 1 an ein feststehendes Aufbauteil 4, beispielsweise am Fahrzeugrahmen, angeschraubt werden kann. Von der Grundplatte 2 steht ein keilförmiger Steg 5 ab, der an dem der Grundplatte 2 gegenüberliegenden Ende ein Platte 6 trägt. Weiterhin steht von der Grundplatte 2 ein Vorsprung 7 ab, der grob gesehen einen dreieckigen Querschnitt aufweist.

Das Eingriffsteil 8, das mit der Drehstange 9 verbunden ist, weist einen gabelförmigen Spannzapfen 10 auf, der im Bereich der Gabel eine dem keilförmigen Steg 5 entsprechende Kontur besitzt. Auf der dem Spannzapfen 10 gegenüberliegenden Seite besitzt das Eingriffsteil 8 eine Einsenkung 11, die in der Schließstellung des Verschlusses am Vorsprung 7 des Gegenhalters 1 anliegt. Durch die Formgebung des Gegenhalters 1 und des Eingriffsteils 8 wird in der Schießstellung das Eingriffsteil 8 nicht nur in der waagrechten, sondern auch in der senkrechten Richtung durch den Gegenhalter 1 festgehalten.

Zur Erzielung einer Drehmomentfreiheit in der Schließstellung ist das Eingriffsteil 8 mit einem zur Drehstange 9 axial verlaufenden Zapfen 12 und einem seitlich davon angeordneten Nocken 13, der hier die Form eines Stifts aufweist, versehen. Am feststehenden Aufbauteil 4 ist außerdem ein Gehäuse 14 für einen durch eine Feder 15 beaufschlagten Schieber 16 angeordnet, der einen Arm 17 aufweist, welcher in der Schließstellung des Verschlusses den Zapfen 12 übergreift. Beim Öffnen des Verschlusses legt sich der Nocken 13 gegen eine Kante 18 des Schiebers 16 und drückt diesen soweit zurück, daß der Arm 17 den Zapfen 12 freigibt.

Die Handhabe für die Drehstange 9 und die Lager für die Drehstange sind üblicher Bauart, weshalb sie nicht dargestellt sind.

## Patentansprüche

1. Drehstangenverschluß für Türen, Klappen oder dergleichen von Nutzfahrzeugaufbauten, mit mindestens einem Eingriffsteil (8) an einem der Enden der senkrecht an oder in der Türe oder Klappe gelagerten Drehstange (9), welches Eingriffsteil (8) in der Schließstellung durch einen an einem feststehenden Aufbauteil (4) angebrachten Gegenhalter (1) festgelegt ist, und mit einer Handhabe zum Drehen der Drehstange (9), **dadurch gekennzeichnet**, daß das Eingriffsteil auf der der Drehstange (9) gegenüberliegenden Seite einen axial zu dieser verlaufenden Zapfen (12) sowie einen seitlich davon angeordneten Nocken (13) aufweist und daß am feststehenden Aufbauteil (4) ein durch eine Feder (15) beaufschlagter Schieber (16) gelagert ist, der in der Schließstellung des Verschlusses mit einem Arm (17) den Zapfen (12) auf der dem feststehenden Aufbauteil (4) gegenüberliegenden Seite übergreift und in der Offenstellung des Verschlusses vom Nocken (13) soweit zurückgedrückt wird, daß der Arm (17) den Zapfen (12) freigibt.
